# EUROPEAN PATENT APPLICATION

(11) **EP 3 293 706 A1**
(43) Date of publication of application: **14.03.2018**
(21) Application number: 16201687.7
(22) Date of filing: 01.12.2016
(51) Int. Cl.: G07C 9/00, B60R 25/00

(54) **SMART KEY SEARCHING APPARATUS AND METHOD**

(30) Priority: 09.09.2016 KR 20160116607
(71) Applicant: Hyundai Motor Company, Seoul 06797 (KR)
(72) Inventor: LEE, Jung Jun, 00000 Seoul (KR)
(74) Representative: Isarpatent

(57) **Abstract**

A smart key searching apparatus includes a start button for selecting engine start or stop, a wireless charger performing wireless charging in a resonant magnetic coupling manner and transmitting an authentication request signal to a smart key, a radio frequency (RF) receiver receiving a response signal regarding the authentication request signal transmitted from the smart key, and a smart key controller requesting, when the start button is operated, the wireless charger to search for a smart key, and controlling power and engine ignition of a vehicle according to a response signal received through the RF receiver.

## Description

### TECHNICAL FIELD

The present disclosure relates to a smart key searching apparatus and method for searching for a smart key using a resonant magnetic coupling charging system.

### BACKGROUND

In line with the development of electronic control technologies applied to vehicles, technologies such as automatic opening and closing of vehicle doors, automatic engine ignition (or engine start), and the like, using a smart key have been developed. Such a smart key carried by a driver allows for remote opening and closing of a door and engine ignition, maximizing a drivers' convenience.

A smart key system provided in a vehicle may control engine ignition upon sensing a smart key (fob) positioned in, or near, the vehicle. Here, the smart key system uses two low frequency antennas installed within the vehicle to sense the smart key (fob).

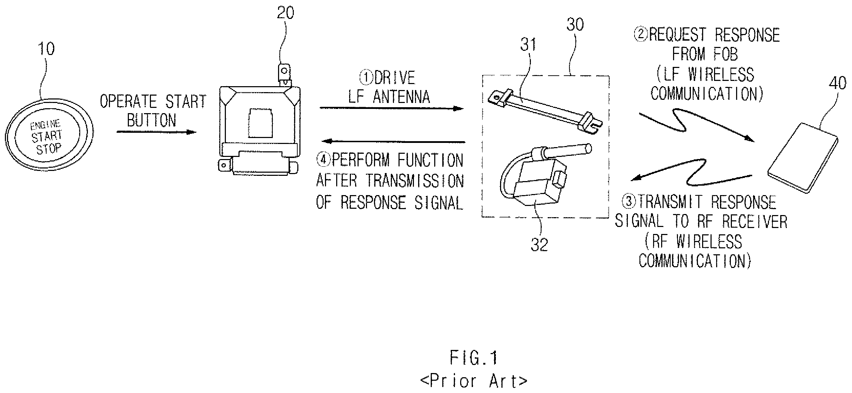

FIG. 1 is a view illustrating a related art smart key search method.

A smart key system includes a start button 10, a smart key controller 20 and a transceiver 30 including a low frequency (LF) antenna 31 and a radio frequency (RF) receiver.

When the start button 10 is operated (by an input), the smart key controller 20 of the smart key system senses the operation of the start button 10 and drives the LF antenna 31. Also, the smart key controller 20 transmits a response request signal for authenticating a smart key 40 to the smart key 40 through the LF antenna 31. The smart key 40 transmits a response signal through RF wireless communication.

When the response signal is received from the smart key 40 through the RF receiver 32 and authentication included in the received response signal is valid, the smart key controller 20 controls engine ignition and possibly other functions as well.

### SUMMARY

The present disclosure has been made to solve the above-mentioned problems occurring in the prior art while advantages achieved by the prior art are maintained intact.

An aspect of the present disclosure provides a smart key searching apparatus and method for searching for a smart key within a vehicle using a wireless charge frequency of a resonant magnetic coupling charging system, rather than using a low frequency (LF) antenna which has been used to search for a smart key in the related art.

According to an exemplary embodiment of the present disclosure, a smart key searching apparatus includes: a start button selecting engine start or stop; a wireless charger performing wireless charging in a resonant magnetic coupling manner and transmitting an authentication request signal to a smart key; a radio frequency (RF) receiver receiving a response signal regarding the authentication request signal transmitted from the smart key; and a smart key controller requesting, when the start button is input, the wireless charger to search for a smart key, and controlling power and engine ignition of a vehicle according to a response signal received through the RF receiver.

The wireless charger may transmit the authentication request signal at a low frequency (LF) band.

When the wireless charger receives the smart key search request from the smart key controller, while performing wireless charging, the wireless charger may temporarily stop the charging operation and transmit the authentication request signal.

When a predetermined period of time has elapsed since transmission of the authentication request signal was completed, the wireless charger may resume the charging operation.

The wireless charger may display whether the wireless charger is in a charge state or in a smart key search state through a display.

The wireless charger may determine whether to display a charge state according to a user selection.

When the authentication request signal is received, the smart key may generate and transmit a response signal including authentication information of the smart key.

The smart key controller may determine whether the authentication information included in the response signal is valid, and when the authentication information is valid, the smart key controller may control power and engine ignition of the vehicle.

According to another exemplary embodiment of the present disclosure, a smart key searching method includes: sensing, by a smart key controller, an operation of a start button; when the operation of the start button is sensed, requesting, by the smart key controller, a wireless charger to search for a smart key; driving, by the wireless charger, a charge coil according to the smart key search request and transmitting an authentication request signal to a smart key; transmitting, by the smart key, a response signal in response to the authentication request signal; and when the response signal is received, controlling, by the smart key controller, power and engine ignition of a vehicle according to the received response signal.

The transmitting of the authentication request signal to the smart key may include: when the wireless charger receives the smart key search request, determining, by the wireless charger, whether the wireless charger is performing a charging operation; and when the wireless charger is performing the charging operation, temporarily stopping the charging operation.

The method may further include: after the transmitting of the authentication request signal to the smart key, when a predetermined period of time has elapsed since transmission of the authentication request signal was completed, resuming, by the wireless charger, the charging operation.

In the controlling of power and engine ignition of the vehicle, whether authentication information included in the response signal is valid may be determined, and when the authentication information is valid, power and engine ignition of the vehicle may be controlled.

### BRIEF DESCRIPTION OF THE DRAWINGS

The above and other objects, features and advantages of the present disclosure will be more apparent from the following detailed description taken in conjunction with the accompanying drawings.
FIG. 1 is a view illustrating a related art method for searching for a smart key.
FIG. 2 is a block diagram illustrating a smart key searching device according to exemplary embodiments of the present disclosure.
FIG. 3 is a block diagram schematically illustrating the wireless charger shown in FIG. 2.
FIG. 4 is a block diagram schematically illustrating the smart key shown in FIG. 2.
FIG. 5 is a flowchart illustrating a smart key searching method according to exemplary embodiments of the present disclosure.

### DETAILED DESCRIPTION

Terms of "comprise" and variations such as "includes", "comprises" or "has" described in this disclosure will be understood to imply the inclusion of stated elements but not the exclusion of any other elements, unless explicitly described to the contrary.

In addition, the terms "-er", "-or" and "module" described in the specification mean units for processing at least one function and operation and can be implemented by hardware components or software components and combinations thereof. Articles such as "a" or "the" may include plural forms unless referred to the contrary in context describing the present disclosure. Hereinafter, exemplary embodiments of the present disclosure will be described in detail with reference to the accompanying drawings.

The present disclosure is based on the recognition that a smart key search frequency and a charge frequency of a resonant magnetic coupling charging system are the same low frequency (LF) band, in which power, electrical power, and engine ignition of a vehicle are controlled by recognizing a smart key within, or near, the vehicle using a wireless charge frequency of the resonant magnetic coupling charging system without using an existing LF antenna installed within the vehicle.

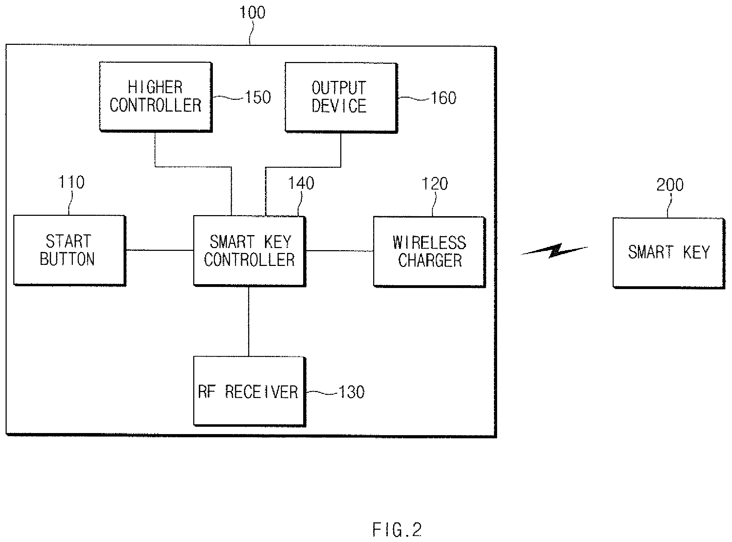

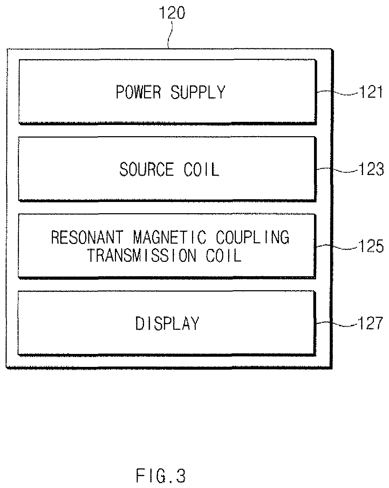

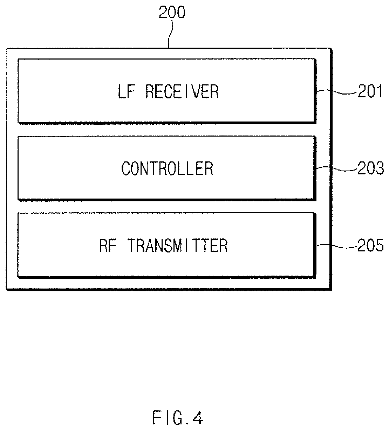

FIG. 2 is a block diagram illustrating a smart key searching device according to exemplary embodiments of the present disclosure, FIG. 3 is a block diagram schematically illustrating the wireless charger 120 illustrated in FIG. 2, and FIG. 4 is a block diagram schematically illustrating the smart key 200 illustrated in FIG. 2.

In exemplary embodiments, a smart key searching apparatus 100 is installed within a vehicle and includes a start button 110, a wireless charger 120, a radio frequency (RF) receiver 130, a smart key controller 140, a higher controller 150 and an output device 160.

The start button 110 generates an electrical signal according to a user operation, or input. The start button 110 serves to select engine start, engine stop, vehicle power ON, vehicle power OFF or accessory power ON ACC.

The wireless charger 120 wirelessly charges a battery such as a charge target device (e.g., a smart key, a mobile terminal, a tablet PC and/or a notebook computer) in a magnetic resonant coupling manner. Here, the charge target device is required to be positioned within a charge available distance (e.g., a few centimeters to a few meters) from the wireless charger 120.

The wireless charger 120 performs data communication with the smart key controller 140 through a vehicle network. Here, the vehicle network is implemented as a controller area network (CAN), a media oriented system transport (MOST) network, a local interconnect network (LIN), X-by-wire (Flexray) and the like. The wireless charger 120 searches for a smart key 200 positioned within a reference distance from the vehicle according to a request from the smart key controller 140. Here, when the wireless charger 120 receives a smart key search request from the smart key controller 140, while wirelessly charging a battery of a charge target device (not shown), the wireless charger 120 temporarily stops wireless charging the battery of the charge target device and performs smart key searching.

As illustrated in FIG. 3, the wireless charger 120 includes a power supply 121, a source coil 123, a magnetic resonant coupling transmission coil 125 and a display 127. Here, the source coil 123 and the magnetic resonant coupling transmission coil 125 are collectively referred to as a charge coil. The power supply 121 supplies electric power (power) required for an operation of the wireless charger 120. The power supply 121 generates an alternating current (AC), and/or a direct current (DC). The source coil 123 transfers electric power provided from the power supply 121 to the magnetic resonant coupling transmission coil 125. The magnetic resonant coupling transmission coil 125 generates a magnetic field vibrating at a specific resonance frequency. The magnetic resonant coupling transmission coil 125 transmits electric power using magnetic field resonance (resonant magnetic coupling).

Also, the magnetic resonant coupling transmission coil 125 performs wireless communication at a predetermined LF band, e.g., at a 125 kHz band. The magnetic resonant coupling transmission coil 125 outputs an LF signal (authentication request signal) requesting smart key authentication to search for a smart key.

The display 127 displays an operational state and a charge state of the wireless charger 120. Here, the operational state is classified as a charge state and a smart key search state (i.e., a state operating as an LF transmission device). The charge state is classified, or termed, as a charging, a charge amount, charge completion and the like.

The display 127 may or may not display a charge state according to a user selection. Here, the display 127 may receive a user input through an input device (not shown) provided in the wireless charger 120 or may receive a user input through an input device (not shown) provided in the smart key searching apparatus 100.

The RF receiver 130 performs wireless communication with the smart key 200 at an RF band (e.g., 433 MHz). The RF receiver 130 receives an RF signal transmitted from the smart key 200.

When an input of the start button 110 by a user is sensed, the smart key controller 140 requests the wireless charger 120 to search for a smart key. In other words, when an electrical signal generated by the start button 110 is received according to a user operation, the smart key controller 140 outputs a smart key search request to the wireless charger 120.

The smart key controller 140 receives a response signal transmitted from the smart key 200 through the RF receiver 130. The smart key 200 transmits a response signal including authentication information. Here, the authentication information may be an identification number of the smart key 200, e.g., a personal identification number (PIN) or the like.

The smart key controller 140 determines whether the authentication information included in the received response signal is valid, and controls power and engine ignition of the vehicle according to the authentication determination result. That is, when the authentication information of the smart key 200 is valid, the smart key controller 140 transmits a signal for starting an engine to the higher controller 150.

The higher controller 150 may be a hybrid control unit (HCU) or an engine electronic control unit (ECU). The output device 160, serving to output visual information, audible information and tactile information, may include a display, a speaker, a haptic module and the like.

When a smart key authentication request signal is received from the smart key searching apparatus 100, the smart key 200 transmits a response signal in response to the authentication request. The smart key 200 includes an LF receiver 201, a controller 203 and an RF transmitter 205, as illustrated in FIG. 4.

The LF receiver 201 receives a smart key authentication request signal transmitted from the resonant magnetic coupling transmission coil 125 of the smart key searching apparatus 100. That is, the LF receiver 201 receives an LF signal transmitted from the smart key searching apparatus 100.

When the authentication request signal is received from the LF receiver 201, the controller 203 generates and outputs a corresponding response signal. The controller 203 generates a response signal including the authentication information of the smart key 200.

The RF transmitter 205 transmits the response signal through RF wireless communication under the control of the controller 203. In other words, the RF transmitter 205 transmits the response signal including the authentication information output from the controller 203, as an RF signal.

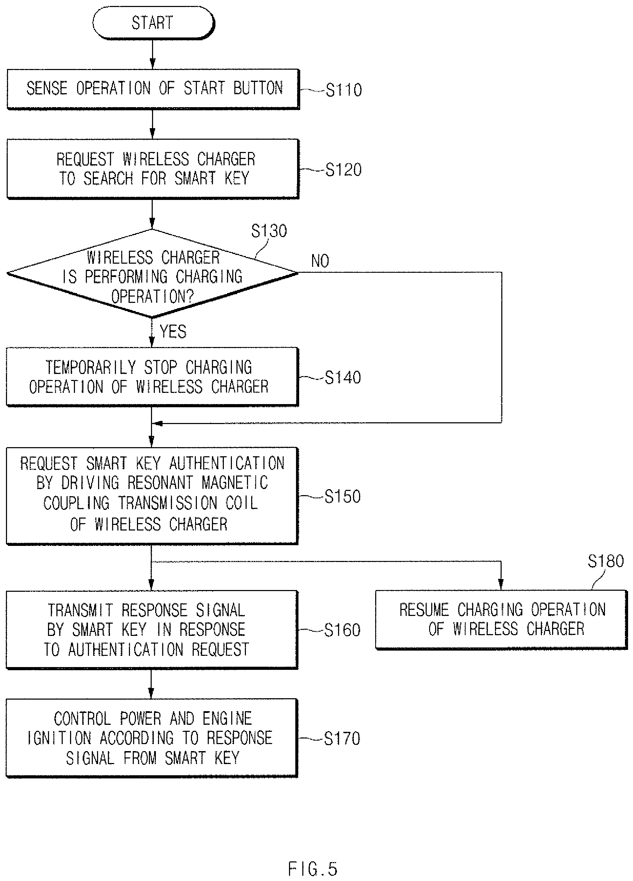

FIG. 5 is a flowchart illustrating a smart key searching method according to exemplary embodiments of the present disclosure.

As illustrated in FIG. 5, the smart key controller 140 senses an operation of the start button 110 in operation S110. For example, when the user presses the start button 110, the start button 110 generates a corresponding electrical signal. When the electrical signal generated by the start button 110 is received, the smart key controller 140 senses that the start button 110 has been operated.

When the operation of the start button 110 is sensed, the smart key controller 140 requests the wireless charger 120 to search for a smart key in operation S120. The smart key controller 140 transmits a smart key search request to the wireless charger 120 through a vehicle network.

When the smart key search request is received from the smart key controller 140, the wireless charger 120 determines whether a battery of a charge target device (not shown) is being wirelessly charged in operation S130. In other words, when the smart key search request is received, the wireless charger 120 determines whether an operational state thereof is a charge state. Here, the operational state may be a charge state or a smart key search state. The wireless charger 120 displays an operational state through the display 127 such that the user (or driver) may recognize an operational state of the wireless charger 120. Here, the display 127 may output the operational state in a form of information such as text, an image and/or a symbol.

When the wireless charger 120 is performing wireless charging, the wireless charger 120 temporarily stops the charge operation in operation S140. The wireless charger 120 stops transmitting a wireless charge frequency (LF signal) through the charge coils 123 and 125. That is, the wireless charger 120 stops supplying wireless power to stop charging the battery of the charge target device for a predetermined period of time.

The wireless charger 120 drives the charge coils 123 and 125 to request smart key authentication in operation S150. The wireless charger 120 drives the charge coils 123 and 125 and transmits a smart key authentication request signal as an LF signal.

The smart key 200 transmits a response signal in response to the authentication request from the wireless charger 120 in operation S160. The smart key 200 transmits the response signal including authentication information of the smart key 200, as an RF signal.

The smart key controller 140 controls power and the engine according to the response signal from the smart key 200 in operation S170. The smart key controller 140 receives a response signal transmitted from the smart key through the RF receiver 130. Also, the smart key controller 140 determines whether the authentication information included in the received response signal is valid. When the authentication information is valid, the smart key controller 140 controls power and engine ignition of the vehicle. However, when the authentication information is not valid, the smart key controller 140 outputs a warning sound and/or a warning message in the form of visual and/or audible information through the output device 160, and ceases the supply of power and blocks engine ignition control of the vehicle.

Meanwhile, after transmitting the smart key authentication request in operation S150, the wireless charger 120 resumes charging of the battery of the charge target device in operation S180. Here, when a predetermined period of time (e.g., two seconds) has elapsed since the smart key authentication request was completed, the wireless charger 120 resumes the charging operation. In other words, the wireless charger 120 transmits wireless power through the charge coil.

As described above, according to exemplary embodiments of the present disclosure, power and engine ignition of the vehicle may be controlled by recognizing the smart key even without the related art LF antenna installed within a vehicle, by utilizing the resonant magnetic coupling charging system.

In addition, since a smart key may be searched without an LF antenna, an LF antenna within the vehicle may be eliminated. Thus, costs may be reduced and the same merchantable quality may be maintained.

Even though all of elements of exemplary embodiments according to the present disclosure have been described as being coupled or as being coupled and operating as one element, the present disclosure is not limited to the exemplary embodiments. That is, to the extent of the purpose of the present disclosure, all of such elements may be selectively coupled and operate as one or more elements. Such elements may be realized as individual hardware components, but all or part of such elements may be selectively combined into a computer program having a program module performing partial or all functions combined by a single or a plurality of hardware. Codes and code segments forming the computer program may be easily inferred by a person of ordinary skill in the art of the present disclosure. Such computer program may be stored in computer readable media read by a computer, and may be read and executed by the computer to thereby realize the exemplary embodiments of the present disclosure.

Hereinabove, although the present disclosure has been described with reference to exemplary embodiments and the accompanying drawings, the present disclosure is not limited thereto, but may be variously modified and altered by those skilled in the art to which the present disclosure pertains without departing from the spirit and scope of the present disclosure claimed in the following claims.

### SYMBOL OF EACH OF THE ELEMENTS IN THE FIGURES

110: START BUTTON
120: WIRELESS CHARGER
130: RF RECEIVER
140: SMART KEY CONTROLLER
150: HIGHER CONTROLLER
160: OUTPUT DEVICE
200: SMART KEY
121: POWER SUPPLY
123: SOURCE COIL
125: RESONANT MAGNETIC COUPLING TRANSMISSION COIL
127: DISPLAY
201: LF RECEIVER
203: CONTROLLER
205: RF TRANSMITTER
S110: SENSE OPERATION OF START BUTTON
S120: REQUEST WIRELESS CHARGER TO SEARCH FOR SMART KEY
S130: WIRELESS CHARGER IS PERFORMING CHARGING OPERATION?
S140: TEMPORARILY STOP CHARGING OPERATION OF WIRELESS CHARGER
S150: REQUEST SMART KEY AUTHENTICATION BY DRIVING RESONANT MAGNETIC COUPLING TRANSMISSION COIL OF WIRELESS CHARGER
S160: TRANSMIT RESPONSE SIGNAL BY SMART KEY IN RESPONSE TO AUTHENTICATION REQUEST
S170: CONTROL POWER AND ENGINE IGNITION ACCORDING TO RESPONSE SIGNAL FROM SMART KEY
S180: RESUME CHARGING OPERATION OF WIRELESS CHARGER

## Claims

1. A smart key searching apparatus comprising:
a start button for selecting engine start or stop;
a wireless charger performing wireless charging in a resonant magnetic coupling manner and transmitting an authentication request signal to a smart key;
a radio frequency (RF) receiver receiving a response signal regarding the authentication request signal transmitted from the smart key; and
a smart key controller requesting, when the start button is operated, the wireless charger to search for a smart key, and controlling power and engine ignition of a vehicle according to a response signal received through the RF receiver.

2. The smart key searching apparatus according to claim 1, wherein the wireless charger transmits the authentication request signal in a low frequency (LF) band.

3. The smart key searching apparatus according to claim 1, wherein when the wireless charger receives the smart key search request from the smart key controller, while performing wireless charging, the wireless charger temporarily stops the charging operation and transmits the authentication request signal.

4. The smart key searching apparatus according to claim 3, wherein when a predetermined period of time has elapsed since the transmission of the authentication request signal was completed, the wireless charger resumes the charging operation.

5. The smart key searching apparatus according to claim 1, wherein the wireless charger displays whether the wireless charger is in a charge state or in a smart key search state via a display.

6. The smart key searching apparatus according to claim 1, wherein the wireless charger determines whether to display a charge state according to a user selection.

7. The smart key searching apparatus according to claim 1, wherein when the authentication request signal is received, the smart key generates and transmits a response signal including authentication information of the smart key.

8. The smart key searching apparatus according to claim 1, wherein the smart key controller determines whether the authentication information included in the response signal is valid, and when the authentication information is determined to be valid, the smart key controller controls power and engine ignition of the vehicle.

9. A smart key searching method comprising:
sensing, by a smart key controller, an operation of a start button;
when the operation of the start button is sensed, requesting, by the smart key controller, a wireless charger to search for a smart key;
driving, by the wireless charger, a charge coil according to the smart key search request and transmitting an authentication request signal to a smart key;
transmitting, by the smart key, a response signal in response to the authentication request signal; and
when the response signal is received, controlling, by the smart key controller, power and engine ignition of a vehicle according to the received response signal.

10. The smart key searching method according to claim 9, wherein the transmitting of the authentication request signal to the smart key includes:
when the wireless charger receives the smart key search request, determining, by the wireless charger, whether the wireless charger is performing a charging operation; and
when the wireless charger is determined to be performing the charging operation, temporarily stopping the charging operation.

11. The smart key searching method according to claim 10, further comprising: after the step of transmitting the authentication request signal to the smart key, when a predetermined period of time has elapsed since the transmission of the authentication request signal was completed, resuming, by the wireless charger, the charging operation.

12. The smart key searching method according to claim 9, wherein, in the step of controlling power and engine ignition of the vehicle, whether authentication information included in the response signal is valid is determined, and when the authentication information is determined to be valid, power and engine ignition of the vehicle are controlled.

## Amended claims

### Amended claims in accordance with Rule 137(2) EPC.

1. A smart key searching apparatus (100), comprising:
a start button (110) for selecting engine start or stop;
a wireless charger (120) performing wireless charging in a resonant magnetic coupling manner and transmitting an authentication request signal to a smart key (200);
a radio frequency (RF) receiver (130) receiving a response signal regarding the authentication request signal transmitted from the smart key (200); and
a smart key controller (140) requesting, when the start button (110) is operated, the wireless charger (120) to search for a smart key (200), and controlling power and engine ignition of a vehicle according to a response signal received through the RF receiver (130).

2. The smart key searching apparatus (100) according to claim 1, wherein the wireless charger (120) transmits the authentication request signal in a low frequency (LF) band.

3. The smart key searching apparatus (100) according to claim 1, wherein when the wireless charger (120) receives the smart key search request from the smart key controller (140), while performing wireless charging, the wireless charger (120) temporarily stops the charging operation and transmits the authentication request signal.

4. The smart key searching apparatus (100) according to claim 3, wherein when a predetermined period of time has elapsed since the transmission of the authentication request signal was completed, the wireless charger (120) resumes the charging operation.

5. The smart key searching apparatus (100) according to claim 1, wherein the wireless charger (120) displays whether the wireless charger (120) is in a charge state or in a smart key search state via a display.

6. The smart key searching apparatus (100) according to claim 1, wherein the wireless charger (120) determines whether to display a charge state according to a user selection.

7. The smart key searching apparatus (100) according to claim 1, wherein when the authentication request signal is received, the smart key (200) generates and transmits a response signal including authentication information of the smart key (200).

8. The smart key searching apparatus (100) according to claim 1, wherein the smart key controller (140) determines whether the authentication information included in the response signal is valid, and when the authentication information is determined to be valid, the smart key controller (140) controls power and engine ignition of the vehicle.

9. A smart key searching method, comprising:
sensing, by a smart key controller (140), an operation of a start button (110);
when the operation of the start button (110) is sensed, requesting, by the smart key controller (140), a wireless charger (120) to search for a smart key (200);
driving, by the wireless charger (120), a charge coil according to the smart key search request and transmitting an authentication request signal to a smart key (200);
transmitting, by the smart key (200), a response signal in response to the authentication request signal; and
when the response signal is received, controlling, by the smart key controller (140), power and engine ignition of a vehicle according to the received response signal.

10. The smart key searching method according to claim 9, wherein the transmitting of the authentication request signal to the smart key (200) includes:
when the wireless charger (120) receives the smart key search request, determining, by the wireless charger (120), whether the wireless charger (120) is performing a charging operation; and
when the wireless charger (120) is determined to be performing the charging operation,
temporarily stopping the charging operation.

11. The smart key searching method according to claim 10, further comprising: after the step of transmitting the authentication request signal to the smart key (200), when a predetermined period of time has elapsed since the transmission of the authentication request signal was completed, resuming, by the wireless charger (120), the charging operation.

12. The smart key searching method according to claim 9, wherein, in the step of controlling power and engine ignition of the vehicle, whether authentication information included in the response signal is valid is determined, and when the authentication information is determined to be valid, power and engine ignition of the vehicle are controlled.
